# EUROPÄISCHE PATENTSCHRIFT

(11) **EP 1 586 492 B1**
(45) Veröffentlichungstag und Bekanntmachung des Hinweises auf die Patenterteilung: **12.12.2007**
(21) Anmeldenummer: 05007871.6
(22) Anmeldetag: 11.04.2005
(51) Int. Cl.: B62D 1/06

(54) **Verfahren zur Herstellung eines Lenkrads mit mehrfarbiger Umschäumung**
Process of manufacturing a steering wheel with multi-coloured foam
Procédé de fabrication d'un volant de direction en mousse à couleurs multiples

(30) Priorität: 16.04.2004 DE 102004018462
(43) Veröffentlichungstag der Anmeldung: 19.10.2005
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Strass, Jürgen

(56) Entgegenhaltungen:
- DE-A1- 10 227 196
- DE-C1- 10 213 799
- US-A- 3 523 464
- US-A- 3 726 152
- US-A- 5 840 144
- US-A1- 2002 008 097
- US-A1- 2004 050 204

## Beschreibung

Die Erfindung betrifft ein Verfahren zur Herstellung eines Lenkrads mit mehrfarbiger Umschäumung.

Aus der US-A-3 523 464 ist ein Verfahren zur Herstellung eines Lenkrads mit einer mehrteiligen Umschäumung bekannt, das folgende Schritte aufweist:
- Bildung einer ersten Umschäumung durch Umschäumen eines Lenkradskeletts in einer ersten Schäumform mit einem ersten Schaum, der im verfestigten Zustand eine erste Farbe aufweist;
- Abdecken bestimmter Bereiche der ersten Umschäumung; und
- Bildung einer zweiten Umschäumung in einer zweiten Schäumform, wobei der zweite Schaum im verfestigten Zustand eine von der ersten Farbe verschiedene zweite Farbe aufweist.

Die zweite Umschäumung wird anschließend dem Lenkrad hinzugefügt.

Mehrfarbige Lenkräder sind ansonsten bislang nur durch mehrfarbige Lederummantelungen darstellbar. Da Lederlenkräder ohnehin in der Herstellung verhältnismäßig teuer sind und daher in der Regel nur in Kraftfahrzeugen mit gehobener Ausstattung angeboten werden, besteht ein Bedarf nach mehrfarbigen Lenkrädern, die ohne übermäßige Mehrkosten herstellbar sind.

Die Erfindung sieht hierzu ein Verfahren mit den Merkmalen des Anspruchs 1 vor.

Gemäß der Erfindung wird ein mehrfarbiges Lenkrad also durch mehrfaches Umschäumen unter Verwendung verschiedenfarbiger Schaummischungen erhalten. Eine mehrfarbige Belederung auf der Umschäumung ist nicht mehr erforderlich. Somit kann ein Lenkrad mit moderaten Mehrkosten optisch aufgewertet werden, z.B. für Sondereditionen eines Serienfahrzeugs mit besonders gestaltetem Interieur.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
Fig. 1 ein erfindungsgemäß hergestelltes Lenkrad;
Fig. 2 ein Zierelement für das erfindungsgemäß hergestellte Lenkrad; und
Fig. 3 einen vergrößerten Übergangsbereich zwischen zwei verschiedenfarbigen Bereichen des erfindungsgemäß hergestellten Lenkrads.

Das erfindungsgemäße Verfahren zur Herstellung eines Lenkrads 10 mit mehrfarbiger Umschäumung wird vorzugsweise folgendermaßen ausgeführt:

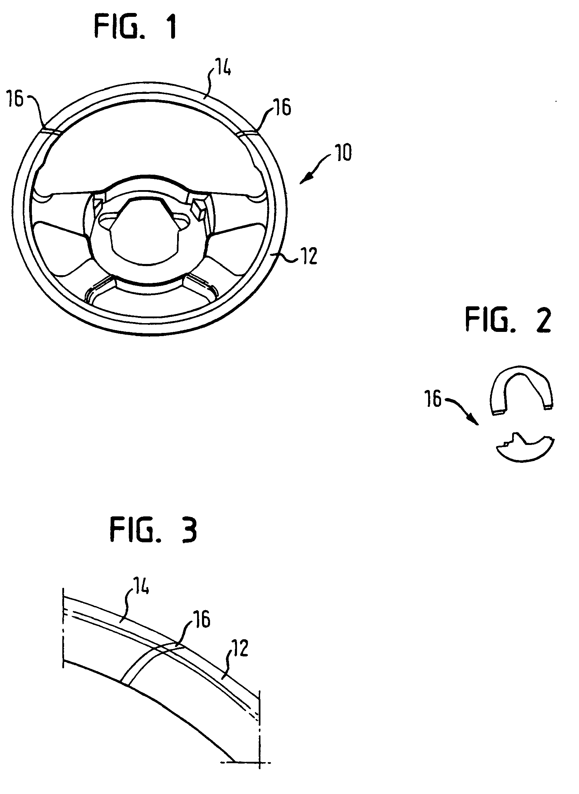

Ein Lenkradskelett wird in eine erste Schäumform eingelegt und zur Bildung einer ersten Umschäumung 12 unter Verwendung herkömmlicher Technik mit einem ersten Schaum umschäumt. Die Schäumform ist dabei so ausgelegt, daß die erste Umschäumung 12 in den Bereichen des Lenkrads 10, die später eine andere Farbe haben sollen, im Vergleich zu den angrenzenden Bereichen verjüngt ist. Das Zwischenprodukt wird nun in eine zweite Schäumform eingelegt. Die nichtverjüngten Bereiche der ersten Umschäumung 12 werden durch eine oder mehrere Masken abgedeckt. Anschließend werden wie zuvor bei der Herstellung der ersten Umschäumung 12 auf herkömmliche Weise ein Trennmittel und danach ein sog. IMC-Lack (in-mould coating) aufgetragen. Nach dem Entfernen der Maske(n) wird die zweite Schäumform geschlossen und ein zweites Schaumgemisch über ein oder mehrere Angußstellen eingebracht, so daß eine zweite Umschäumung 14 entsteht. Der erste und der zweite Schaum haben im erkalteten Zustand unterschiedliche Farben, so daß ein Lenkrad 10 mit mehrfarbiger Umschäumung gebildet ist (siehe Fig. 1).

Bei der Bildung der zweiten Umschäumung 14 sorgen 1 bis 2 mm dicke Schwerter für eine Abdichtung an den Farbübergangsbereichen zur ersten Umschäumung 12, so daß keine Farbe zur ersten Umschäumung 12 übertreten kann. Nach dem Entformen wird das Lenkrad 10 wie üblich von Grat befreit. Anschließend werden die Übergangsbereiche mit Zierelementen 16, z.B. Chromringen oder -spangen, verschlossen (siehe Figuren 2 und 3).

Das erfindungsgemäße Verfahren kann selbstverständlich auf mehr als zwei Umschäumungsschnitte ausgedehnt werden, so daß Lenkräder mit vielfältiger Farbgestaltung hergestellt werden können.

## Patentansprüche

1. Verfahren zur Herstellung eines Lenkrads (10) mit mehrfarbiger Umschäumung, wobei das Verfahren folgende Schritte umfaßt:
- Bildung einer ersten Umschäumung (12) durch Umschäumen eines Lenkradskeletts in einer ersten Schäumform mit einem ersten Schaum, der im verfestigten Zustand eine erste Farbe aufweist;
- Einlegen des so gebildeten Zwischenprodukts in eine zweite Schäumform;
- Abdecken nicht verjüngter Bereiche der ersten Umschäumung (12) durch eine oder mehrere Masken;
- Auftragen eines Lacks;
- Entfernen der Maske(n);
- Bildung einer zweiten Umschäumung (14) durch Einbringen eines zweiten Schaums in die zweite Schäumform, wobei der zweite Schaum im verfestigten Zustand eine von der ersten Farbe verschiedene zweite Farbe aufweist.

2. Verfahren nach Anspruch 1, **dadurch gekennzeichnet, daß** nach dem Abdecken und vor der Bildung der zweiten Umschäumung (14) ein Trennmittel aufgebracht wird.

3. Verfahren nach Anspruch 2, **dadurch gekennzeichnet, daß** der Lack nach dem Aufbringen des Trennmittels aufgebracht wird.

4. Verfahren nach einem der vorhergehenden Ansprüche, **dadurch gekennzeichnet, daß** Übergangsbereiche zwischen der ersten Umschäumung (12) und der zweiten Umschäumung (14) durch Trennelemente abgedichtet werden.

5. Verfahren nach Anspruch 4, **dadurch gekennzeichnet, daß** die Übergangsbereiche nach der Bildung der zweiten Umschäumung (14) durch Zierelemente (16) verschlossen werden.

6. Verfahren nach einem der vorhergehenden Ansprüche, **dadurch gekennzeichnet, daß** die erste Schäumform so ausgelegt ist, daß die verjüngten Bereiche Randbereiche der ersten Umschäumung (12) sind.

7. Verfahren nach einem der vorhergehenden Ansprüche, **dadurch gekennzeichnet, daß** wenigstens eine weitere Umschäumung mit einem weiteren Schaum gebildet wird, der im verfestigten Zustand eine von der zweiten Farbe verschiedene Farbe aufweist.

8. Lenkrad (10) mit mehrfarbiger Umschäumung, das mittels eines Verfahrens nach einem der vorstehenden Ansprüche hergestellt ist.

9. Lenkrad nach Anspruch 8, **dadurch gekennzeichnet, daß** die erste Umschäumung (12) verjüngte Bereiche aufweist, auf denen die zweite Umschäumung (14) aufgebracht ist.

10. Lenkrad nach Anspruch 8 oder 9, **dadurch gekennzeichnet, daß** Übergangsbereiche zwischen der ersten Umschäumung (12) und der zweiten Umschäumung (14) durch Zierelemente (16) verschlossen sind.

## Claims

1. A method of producing a steering wheel (10) having a multi-coloured foam surrounding, the method comprising the following steps:
- forming a first foam surrounding (12) by surrounding a steering wheel skeleton with foam in a first mould with a first foam which in solidified state has a first colour;
- placing the intermediate product formed in this way into a second mould;
- covering non-tapered regions of the first foam surrounding (12) by one or more masks;
- applying a lacquer;
- removing the mask(s);
- forming a second foam surrounding (14) by introducing a second foam into the second mould, the second foam in solidified state having a second colour different from the first colour.

2. The method according to claim 1, **characterized in that** after the covering step and before forming the second foam surrounding (14), a separating agent is applied.

3. The method according to claim 2, **characterized in that** the lacquer is applied after the application of the separating agent.

4. The method according to any of the preceding claims, **characterized in that** transition regions between the first foam surrounding (12) and the second foam surrounding (14) are sealed by separating elements.

5. The method according to claim 4, **characterized in that** after forming the second foam surrounding (14), the transition regions are closed by decorative elements (16).

6. The method according to any of the preceding claims, **characterized in that** the first mould is designed such that the tapered regions are marginal regions of the first foam surrounding (12).

7. The method according to any of the preceding claims, **characterized in that** at least one further foam surrounding is formed with a further foam which in solidified state has a colour different from the second colour.

8. A steering wheel (10) having a multi-coloured foam surrounding, the steering wheel being produced by means of a method according to any of the preceding claims.

9. The steering wheel according to claim 8, **characterized in that** the first foam surrounding (12) has tapered regions, the second foam surrounding (14) being applied on the tapered regions.

10. The steering wheel according to claim 8 or 9, **characterized in that** transition regions between the first foam surrounding (12) and the second foam surrounding (14) are closed by decorative elements (16).

## Revendications

1. Procédé de fabrication d'un volant de direction (10) avec enrobage par moussage multicolore, le procédé comprenant les étapes suivantes :
- formation d'un premier enrobage par moussage (12) en enrobant par moussage un squelette de volant de direction dans un premier moule de moussage avec une première mousse qui présente une première couleur à l'état solidifié ;
- insertion du produit intermédiaire ainsi formé dans un deuxième moule de moussage ;
- recouvrement par un ou plusieurs masques, de zones non rétrécies du premier enrobage par moussage (12) ;
- application d'une peinture ;
- enlèvement du/des masque(s) ;
- formation d'un deuxième enrobage par moussage (14) en introduisant une deuxième mousse dans le deuxième moule de moussage, la deuxième mousse présentant à l'état solidifié une deuxième couleur différente de la première couleur.

2. - Procédé selon la revendication 1, **caractérisé en ce qu'**un agent séparateur est appliqué après le recouvrement et avant la formation du deuxième enrobage par moussage (14).

3. Procédé selon la revendication 2, **caractérisé en ce que** la peinture est appliquée après l'application de l'agent séparateur.

4. Procédé selon l'une des revendications précédentes, **caractérisé en ce que** des zones de transition entre le premier enrobage par moussage (12) et le deuxième enrobage par moussage (14) sont étanchées par des éléments de séparation.

5. Procédé selon la revendication 4, **caractérisé en ce que** les zones de transition sont fermées par des éléments décoratifs (16) après la formation du deuxième enrobage par moussage (14).

6. Procédé selon l'une des revendications précédentes, **caractérisé en ce que** le premier moule de moussage est conçu de telle sorte que les zones rétrécies sont des zones de bord du premier enrobage par moussage (12).

7. Procédé selon l'une des revendications précédentes, **caractérisé en ce qu'**au moins un autre enrobage par moussage est formé avec une autre mousse qui présente à l'état solidifié une couleur différente de la deuxième couleur.

8. Volant de direction (10) avec enrobage par moussage multicolore, qui est fabriqué au moyen d'un procédé selon l'une des revendications précédentes.

9. Volant de direction selon la revendication 8, **caractérisé en ce que** le premier enrobage par moussage (12) présente des zones rétrécies sur lesquelles est appliqué le deuxième enrobage par moussage (14).

10. Volant de direction selon la revendication 8 ou 9, **caractérisé en ce que** les zones de transition entre le premier enrobage par moussage (12) et le deuxième enrobage par moussage (14) sont fermées par des éléments décoratifs (16).
